(19) Europäisches Patentamt
European Patent Office
Office européen des brevets

(11) EP 2 301 345 A1

(12) # EUROPÄISCHE PATENTANMELDUNG

(43) Veröffentlichungstag:
**30.03.2011 Patentblatt 2011/13**

(21) Anmeldenummer: **09170217.5**

(22) Anmeldetag: **14.09.2009**

(51) Int Cl.:
***A01N 31/08*** *(2006.01)* ***A01N 31/16*** *(2006.01)*
***A01N 43/653*** *(2006.01)* ***B27K 3/38*** *(2006.01)*
***B27K 3/50*** *(2006.01)* ***A01P 3/00*** *(2006.01)*

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **LANXESS Deutschland GmbH**
**51369 Leverkusen (DE)**

(72) Erfinder:
- **Koop, Bernd, Dr.**
**50668 Köln (DE)**
- **Kugler, Martin, Dr.**
**42799 Leichlingen (DE)**

(54) **Zusammensetzungen enthaltend Triazole und Phenolderivate für den Schutz technischer Materialien**

(57) Zusammensetzung, enthaltend
c) wenigstens ein Azol und
d) wenigstens ein Phenol der Formel (I) oder deren Salze

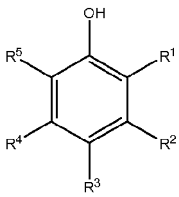

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenigstens einer der Reste $R^1$-$R^5$ ungleich Wasserstoff ist und mit der Maßgabe, dass wenn die Reste $R^1$-$R^5$ ausschließlich für ggf. substituiertes $C_1$-$C_{20}$-Alkyl und ggf. für Wasserstoff stehen
- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt.

EP 2 301 345 A1

## Beschreibung

Die Erfindung betrifft Zusammensetzungen enthaltend wenigstens ein substituiertes Phenol (I) und wenigstens ein Azol, die Verwendung dieser Zusammensetzungen zum Schutz von technischen Materialien sowie technische Materialien.

Wirkstoffe für den Materialschutz, insbesondere gegen Pilze, stammen aus einer Vielzahl von Verbindungsklassen. Besonders wichtig sind für den Holzschutz z.B. Azole, insbesondere Triazole. Einzelwirkstoffe decken jedoch nicht das ganze Spektrum gegen die schädigenden Pilze ab, so dass häufig Kombinationen von Wirkstoffen eingesetzt werden müssen, oder die Wirkstoffe entsprechend hoch dosiert werden müssen.

Zur Behebung dieser Wirkstoffschwächen wurden für den Materialschutz, insbesondere für den Holzschutz, bereits verschiedene Möglichkeiten der Wirkverstärkung untersucht.

In W00071314 wird die Verwendung von Aminoxiden zur Wirkverstärkung von Azolen für den Holzschutz beschrieben. Die Wasserlöslichkeit der Aminoxide führt jedoch dazu, dass die Aminoxide leicht mit Wasser aus dem behandelten Holz ausgewaschen werden können, womit auch die Wirkverstärkung wieder verloren geht.

WO03065807 beschreibt die Verwendung von alkoxylierten Aminen zur Wirkverstärkung von Triazolen. Die Wasserlöslichkeit dieser Wirkverstärker führt jedoch ebenfalls dazu, dass sie leicht mit Wasser aus dem behandelten Holz ausgewaschen werden können.

US6231651-B1 beschreibt die Verwendung von sterisch gehinderten Phenolen zur Wirkverstärkung von insbesondere Propiconazol und Tebuconazol für den Holzschutz. Die dafür verwendeten Antioxidantien wie BHT werden jedoch in einem sehr großen Überschuss von bis zu ca. 450:1 (im Massen-Verhältnis zum Azol) eingesetzt. Dies ist sowohl aus ökonomischer als auch ökologischer Sicht von großem Nachteil.

Darüber hinaus ist die Verwendung von phenolischen Antioxidantien als Wirkverstärker von Tebuconazol und Propiconazol in Kombination mit Komplexbildnern, z.B. Ethylendiamintetraessigsäure (EDTA), bekannt (Phytochemistry 2002, 61, 555-560). Aber auch in diesem Fall werden sehr hohe Retentionen an BHT von bis zu ca. 26 kg pro $m^3$ Holz verwendet.

Aufgabe der vorliegenden Erfindung war es, Wirkverstärker für Azole für den Schutz von technischen Materialien, insbesondere für den Holzschutz, vor Befall und/oder Zerstörung durch Mikroorganismen bereitzustellen, die auf der einen Seite nur wenig aus dem technischen Material ausgewaschen werden und andererseits in einem ökonomischen Verhältnis zum Azol eingesetzt werden können.

Überraschenderweise wurde daher eine Zusammensetzung gefunden, enthaltend

a) wenigstens ein Azol und

b) wenigstens ein Phenol der Formel (I) oder deren Salze

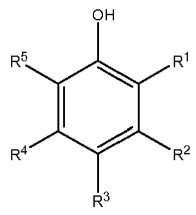

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenigstens einer der Reste $R^1$-$R^5$ ungleich Wasserstoff ist und mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt.

Als Azol wird vorzugsweise ein fungizid wirksames Azol eingesetzt, insbesondere wenigstens ein Triazol oder wenigstens ein Imidazol. Besonders bevorzugt ist ein Triazol. Insoweit wird vorzugsweise die verwendungsgemäße Zusammensetzung als mikrobizides Mittel, insbesondere als fungizides Mittel eingesetzt.

Besonders bevorzugte Azole sind Triazole ausgewählt aus der Gruppe bestehend aus Azaconazol, Bitertanol,

Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte.

Ebenfalls bevorzugt sind Zusammensetzungen, enthaltend

a1) wenigstens ein Azol ausgewählt aus der Gruppe bestehend aus Azaconazol, Bitertanol, Bromuconazol, Cyproconazol, Diclobutrazol, Difenoconazol, Diniconazole, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte und

a2) wenigstens ein Azol ausgewählt aus der Gruppe Triadimenol und Triadimefon.

Bevorzugt wird eine Zusammensetzung verwendungsgemäß eingesetzt, die wenigstens ein Azol ausgewählt aus der Gruppe Tebuconazol, Propiconazol, Triadimefon, Triadimenol und Cyproconazol enthält.

Besonders bevorzugt sind Zusammensetzungen, enthaltend wenigstens ein Azol ausgewählt aus der Gruppe Tebuconazol, Propiconazol und Cyproconazol und ggf. ein weiteres Azol ausgewählt aus der Gruppe Triadimenol und Triadimefon.

Besonders bevorzugt sind dabei die folgenden Azol Kombinationen: Tebuconazol und Triadimefon, Tebuconazol und Propiconazol, Tebuconazol und Cyproconazol sowie Propiconazol und Cyproconazol.

Besonders bevorzugte Imidazole sind z. B. Clotrimazol, Bifonazol, Climbazol, Econazol, Fenapanil, Imazalil, Isoconazol, Ketoconazol, Lombazol, Miconazol, Pefurazoat, Prochloraz, Triflumizol sowie deren Metallsalze und Säureaddukte.

Bevorzugt sind Phenole der Komponente b), worin wenigstens einer der Reste $R^1$-$R^5$ der Formel (I) für -$CHR^6$-Phenyl steht, worin
$R^6$ für Wasserstoff oder Methyl steht und
Phenyl unsubstituiert oder durch Hydroxy und wenigstens einen $C_1$-$C_4$-Alkylrest substituiert ist.

Besonders bevorzugt sind Zusammensetzungen, die als Komponente b) wenigstens ein styrolisiertes Phenol oder 6,6'-Di-tert-butyl-2,2'-methylendi-p-kresol enthält.

Als styrolisiertes Phenol können auch Mischungen von ein-, zwei- und/oder dreifach styrolisiertem Phenol eingesetzt werden, wie beispielsweise dem als Vulkanox® SP von LANXESS bekannten Produkt, bei dem es sich um Mischungen der Formel (I) handelt, die ein bis drei der Reste $R^1$-$R^5$ der Formel (I) die Bedeutung -$CH(CH_3)$Phenyl haben.

Das 6,6'-Di-tert-butyl-2,2'-methylendi-p-kresol ist beispielsweise unter dem Namen Vulkanox® BKF von LANXESS im Handel.

Das eingesetzte Azol der Komponente a) wird vorzugsweise zu b) im Gewichtsverhältnis von 50 : 1 bis 1 : 50, insbesondere von 10 : 1 bis 1 : 10, bevorzugt von 5 : 1 bis 1 : 5 eingesetzt. Besonders bevorzugt wird b) zum Azol im Verhältnis von 1 : 1 bis 5 : 1 verwendet.

Die erfindungsgemäß eingesetzten Zusammensetzungen können fest oder flüssig zum Einsatz kommen. Dabei kommen Formulierungen wie Lösungen, Emulsionen, Suspensionen, Pulver, Granulate, Pasten, Aerosole sowie Feinstverkapselungen in polymeren Stoffen in Frage.

Solche Formulierungen können in bekannter Weise hergestellt werden, z.B. durch Vermischen der Zusammensetzungen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können auch organische Lösungsmittel als Hilfslösungsmittel mitverwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycerol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter normalem Druck gasförmig sind, z.B. Aerosol-Treibgase, wie Halogenkohlenwasserstoffe sowie Butan, Propan, Stickstoff und Kohlendioxid. Als feste Träger kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolit, Dolomit sowie synthetische Granulate aus anorganischem und organischem Mehlen sowie Granulate aus organischem Material wie Sägemehl, Kokosnussschalen, Maiskolben und Tabakstengeln. Als Emulgier- und/oder

schaumerzeugende Mittel kommen in Frage: z.B. nichtionische und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Ligninsulfitablaugungen und Methylcellulose.

Es können in den Formulierungen zudem Haftmittel wie Carboxymethylcellulose, natürliche und synthetische, pulverige, körnige oder latexförmige Polymere verwendet werden, wie Gummi arabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die eingesetzte Zusammensetzung kann vorzugsweise Chelatisierungsmittel (beispielsweise Ethylendiamintetraessigsäure (EDTA), Diethylentriaminpentaessigsäure (DTPA), Nitrilotriessigsäure (NTA) oder Citronensäure oder deren Salze) enthalten, vorzugsweise im Stoffmengen-Verhältnis zum Azol von 1:20 bis 20:1, vorzugsweise 5:1 bis 1:5.

Die Zusammensetzungen können weiterhin Farbstoffe wie anorganische Pigmente, z.B. Eisenoxid, Titanoxid, Ferrocyanblau, Kupferoxid und organische Farbstoffe, wie Alizarin-, Azo- und Metallphthalocyaninfarbstoffe enthalten.

Die eingesetzte Zusammensetzung enthält im allgemeinen vorzugsweise 0,1 bis 95 Gewichtsprozent der Komponenten a) und b), vorzugsweise 0,5 bis 90 Gew.-%.

Die verwendungsgemäßen Zusammensetzungen können auch noch weitere Wirkstoffe bspw. Fungizide, Bakterizide und/oder Insektizide enthalten, um so z.B. das Wirkungsspektrum zu verbreitern oder Resistenzentwicklungen vorzubeugen. In vielen Fällen erhält man dabei synergistische Effekte, d.h. die Wirksamkeit kombinierter Wirkstoffe ist größer als die Wirksamkeit der Einzelkomponenten.

Besonders günstige Mischungspartner sind z.B. die folgenden Verbindungen:

Pyridine und Pyrimidine wie:

Ancymidol, Buthiobate, Fenarimol, Mepanipyrin, Nuarimol, Pyroxyfur, Triamirol;

Succinat-Dehydrogenase Inhibitoren wie:

Benodanil, Bixafen, Boscalid, Carboxim, Carboximsulfoxid, Cyclafluramid, Fenfuram, Flutanil, Furametpyr, Furcarbanil, Furmecyclox, Mebenil, Mepronil, Methfuroxam, Metsulfovax, Nicobifen, Pyrocarbolid, Oxycarboxin, Seedvax;

Naphthalin-Derivate wie:

Terbinafine, Naftifine, Butenafine;

Sulfenamide wie:

Dichlofluanid, Tolylfluanid, Folpet, Fluorfolpet, Captan, Captofol;

Benzimidazole wie:

Carbendazim, Benomyl, Fuberidazole, Thiabendazole oder deren Salze;

Morpholinderivate wie:

Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenyl-sulfonsäure;

Benzthiazole wie:

2-Mercaptobenzothiazol;

Benzthiophendioxide wie:

Benzo[b]thiophen-S,S-dioxid-carbonsäurecyclohexylamid;

Benzamide wie:

2,6-Dichloro-N-(4-trifluoromethylbenzyl)-benzamide, Tecloftalam;

Borverbindungen wie:

Borsäure, Borsäureester, Borax;

Formaldehyd und formaldehydabspaltende Verbindungen wie:

Benzylalkoholmono-(poly)-hemiformal, n-Butanol-hemiformal, Dazomet, Ethylenglycolhemiformal, Hexa-hydro-S-triazine, Hexamethylentetramin, N-Hydroxymethyl-N'-methylthioharnstoff, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff;

Isothiazolinone wie:

N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;

Aldehyde wie:

Zimtaldehyd, Formaldehyd, Glutardialdehyd, β-Bromzimtaldehyd, o-Phthaldialdehyd;

Thiocyanate wie:

Thiocyanatomethylthiobenzothiazol, Methylenbisthiocyanat;

quartäre Ammoniumverbindungen und Guanidine wie:

Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilate);

Iodderivate wie:

Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexylcarbamat, 3-Iod-2-propinyl-phenylcarbamat;

Phenole wie:

Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methylphenoxy)-phenol, 4-(2,4-Dimethylphenoxy)-phenol und deren Alkali- und Erdalkalimetallsalze;

Mikrobizide mit aktivierter Halogengruppe wie:

Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-o n , 2 , 2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;

Pyridine wie:

1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;

Methoxyacrylate oder ähnliches wie:

Azoxystrobin, Dimoxystrobin, Fluoxastrobin, Kresoxim-methyl, Metominostrobin, Orysastrobin, Picoxystrobin, Pyraclostrobin, Trifloxystrobin;

Metallseifen wie:

Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;

Metallsalze wie:

Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;

Oxide wie:

Oxide der Metalle Zinn, Kupfer und Zink wie z.B. Tributylzinnoxid, $Cu_2O$, CuO, ZnO;

Oxidationsmittel wie:

Wasserstoffperoxid, Peressigsäure, Kaliumpersulfat;

Dithiocarbamate wie:

Cufraneb, Ferban, Kalium-N-hydroxymethyl-N'-methyl-dithiobarbamat, Na- oder K-dimethyldithiocarbamat, Mancozeb, Maneb, Metam, Metiram, Thiram, Zineb, Ziram;

Nitrile wie:

2,4,5,6-Tetrachlorisophthalodinitril, Dinatrium-cyano-dithioimidocarbamat;

Chinoline wie:

8-Hydroxychinolin und deren Cu-Salze;

sonstige Fungizide und Bakterizide wie:

Bethozaxin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäurechlorid, Tris-N-(cyclohexyldiazeniumdioxy)-alumin i u m , N-(Cyclohexyldiazeniumdioxy)-tributylzinn bzw. K-Salze, Bis-N-(cyclohexyldiazeniumdioxy)-kupfer, Iprovalicarb, Fenhexamid, Spiroxamine, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenone, Cyflufenamid, Tiadinil, Teebaumöl, Phenoxyethanol,

Ag, Zn oder Cu-haltige Zeolithe allein oder eingeschlossen in polymere Werkstoffe. Insektizide:

Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,

Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,

Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3-pyridinyl)methoxy]-3(2H)- pyridazinone (CAS-RN: 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methylethanimidamide, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,

Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialone, Diflubenzuron, Dimethoat, 3,5-Dimethylphenylmethylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,

Eflusilanate, Emamectin, Empenthrin, Endosulfan, EPN, Esfenvalerat, Ethiofencarb, Ethion, Etofenprox, Etrimphos, Etoxazole, Etobenzanid,

Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,

Halofenocid, HCH (CAS RN: 58-89-9), Heptenophos, Hexaflumuron, Hexythiazox, Hydramethylnon, Hydroprene,

Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin, Lama-cyhalothrin, Lufenuron,

Kadedrin,

Lambda-Cyhalothrin, Lufenuron,

Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,

Naled, NI 125, Nicotin, Nitenpyram, Noviflumuron,

Omethoat, Oxamyl, Oxydemethon M, Oxydeprofos,

Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium

Quinalphos,

Resmethrin, Rotenone,

Salithion, Sebufos, Silafluofen, Spinosad, Spirodiclofen, Spiromesifen, Sulfotep, Sulprofos,

Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,

Vamidothion, Xylylcarb, Zetamethrin;

Herbizide und Algizide:

Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryne, Azimsulfuron,

Benazolin, Benfluralin, Benfuresate, Bensulfuron, Bensulfide, Bentazone, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylate, Bialaphos, Benzoyl-prop, Bromobutide, Butroxydim,

Carbetamide, Carfentrazone-ethyl, Carfenstrole, Chlomethoxyfen, Chloramben, Chlorbromuron, Chlorflurenol, Chloridazon, Chlorimuron, Chlornitrofen, Chloroacetic acid, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloate, Cycloxydim, Chloroxynil, Clodinafop-propargyl, Cumyluron, Clometoxyfen, Cybutryn, Cyhalofop, Cyhalofop-butyl, Clopyrasuluron, Cyclosulfamuron,

Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,

Eglinazine, Endothal, EPTC, Esprocarb, Ethalfluralin, Ethidimuron, Ethofumesate, Ethobenzanid, Ethoxyfen, Ethametsulfuron, Ethoxysulfuron,

Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamone, Flumioxzim, Flupyrsulfuron-methyl, Fluthiacet-methyl,

Glyphosate, Glufosinate-ammonium

Haloxyfop, Hexazinone,

Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,

Ketospiradox,

Lactofen, Lenacil, Linuron,

MCPA, MCPA-hydrazid, MCPA-thioethyl, MCPB, Mecoprop, Mecoprop-P, Mefenacet, Mefluidide, Mesosulfuron, Metam, Metamifop, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA, Metolachlor, Metosulam, Metobenzuron,

Naproanilide, Napropamide, Naptalam, Neburon, Nicosulfuron, Norflurazon, Natriumchlorat,

Oxadiazon, Oxyfluorfen, Oxysulfuron, Orbencarb, Oryzalin, Oxadiargyl,

Propyzamide, Prosulfocarb, Pyrazolate, Pyrazolsulfuron, Pyrazoxyfen, Pyribenzoxim, Pyributicarb, Pyridate, Paraquat, Pebulate, Pendimethalin, Pentachlorophenol, Pentoxazone, Pentanochlor, Petroleum oils, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,

Quinmerac, Quinocloamine, Quizalofop, Quizalofop-P, Quinchlorac,

Rimsulfuron

Sethoxydim, Sifuron, Simazine, Simetryn, Sulfosulfuron, Sulfometuron, Sulfentrazone, Sulcotrione, Sulfosate,

Teeröle, TCA, TCA-Natrium, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr,

Tridiphane, Trietazine, Trifluralin, Tycor, Thdiazimin, Thiazopyr, Triflusulfuron,

Vernolate.

Die Erfindung betrifft weiterhin die Verwendung der erfindungsgemäßen Zusammensetzung zum Schutz von technischen Materialien vor Befall und/oder Zerstörung durch Mikroorganismen.

Unter technischen Materialien sind im vorliegenden Zusammenhang nichtlebende Materialien zu verstehen, die für die Verwendung in der Technik zubereitet worden sind. Beispielsweise können technische Materialien, die durch diese Erfindung vor mikrobieller Veränderung oder Zerstörung geschützt werden sollen, Klebstoffe, Leime, Papier und Karton, Textilien, Leder, Holz, Holzwerkstoffe, Holz-Plastik-Verbundstoffe, Anstrichmittel, Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Holzwerkstoffe, Holz-Plastikverbundstoffe, Anstrichmittel, Kühlschmiermittel und Wärmeübertragungsflüssigkeiten genannt, besonders bevorzugt sind als technische Materialien Holz, Holzwerkstoffe und Holz-Plastik-Verbundstoffe (sogenannte Wood-Plastic Composites WPC).

Unter Holz wird insbesondere verstanden: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfernster und -türen, Tischlerarbeiten und Holzprodukte, die beim Hausbau oder in der Bautischlerei Verwendung finden.

Unter Holzwerkstoffen wird insbesondere verstanden: Sperrholz, Spanplatten, Faserplatten, OSB-Platten (oriented strand board) oder Verbundplatten.

Unter Holz-Plastik-Verbundstoff wird insbesondere verstanden: thermoplastisch prozessierbare Verbundwerkstoffe bestehend aus Holz, Kunststoff und Additiven.

Besonders bevorzugt ist Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Zusammensetzungen gegen holzzerstörende Basidiomyceten, vorzugsweise Holobasidiomyceten.

Hierbei seien insbesondere Pilze der folgenden Gattungen genannt:

Coniophora, wie Coniophora puetana,

Lentinus, wie Lentinus tigrinus,

Polyporus, wie Polyporus versicolor,

Gloeophyllum, wie Gloeophyllum trabeum,

Poria, wie Poria placenta,

Coriolus, wie Coriolus versicolor,

Stereum, wie Stereum sanguinolentum.

Die erfindungsgemäß einzusetzenden Zusammensetzungen wirken darüber hinaus gegen holzverfärbende und Moderfäule verursachende Ascomyceten und zugeordnete Deuteromyceten, wie zum Beispiel

Arten der Gattung Glenospora wie Glenospora graphii,

Arten der Gattung Chaetomium wie Chaetomium globosum,

Arten der Gattung Humicola wie Humicola grisea,

Arten der Gattung Petriella wie Petriella setifera,

Arten der Gattung Trichurus wie Trichurus spiralis,

Arten der Gattung Lecythophora wie Lecythophora mutabilis

Arten der Gattung Sclerophoma wie Sclerophoma pityophila

Arten der Gattung Aureobasidium wie Aureobasidium pullulans.

Die Erfindung betrifft weiterhin technische Materialien insbesondere Holz, Holzwerkstoff oder Holz-Plastik-Verbundstoff enthaltend

a) wenigstens ein Azol und

b) wenigstens ein Phenol der Formel (I) oder deren Salze

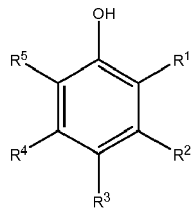
(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt, wobei die oben genannten bevorzugten Ausführungsformen auch hier gelten.

Die Erfindung betrifft weiterhin ein Verfahren zum Schutz von technischen Materialien vor Befall und/oder Zerstörung durch Mikroorganismen, **dadurch gekennzeichnet, dass** man wenigstens eine Zusammensetzung, enthaltend

a) wenigstens ein Azol und

b) wenigstens ein Phenol der Formel (I) oder deren Salze

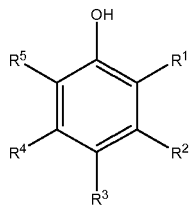
(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt

auf den Mikroorganismus oder dessen Lebensraum einwirken lässt, wobei die oben genannten bevorzugten Ausführungsformen auch hier gelten.

Überraschenderweise wurde nun gefunden, dass durch die erfindungsgemäßen Zusammensetzungen die Wirkung von Azolen gesteigert und dadurch Wirkungsschwächen verringert werden können, so dass weniger Wirkstoff verwendet werden kann bzw. ein breiteres Spektrum an Schadpilzen erfasst wird. 6,6'-Di-tert-butyl-2,2'-methylendi-p-kresol hat eine sehr geringe Wasserlöslichkeit von <1 ppm und einen niedrigen Dampfdruck (0,0001 hPa bei 50°C), wodurch Verluste durch Auswaschen und/oder Verdampfen minimiert werden. Im Vgl. zur in US6231651 beschriebenen Wirkverstärkung mit BHT können deutlich kleinere Mengen an Wirkverstärker der Komponente b) eingesetzt werden, wodurch die Verwendung ökonomischer ist. Styrolisiertes Phenol und 6,6'-Di-tert-butyl-2,2'-methylendi-p-kresol zeigen jeweils in Kombination mit Azolen darüber hinaus gegen verschiedene Pilze einen Synergismus.

Bei dem erfindungsgemäßen Verfahren bzw. bei der Verwendung werden die Zusammensetzungen vorzugsweise durch Streichen, Tränken, Besprühen, Imprägnieren oder in sonstiger Weise auf das technische Material aufgetragen.

Bei Holz sind bevorzugt großtechnische Imprägnierverfahren, zum Beispiel das Vakuum-, Doppelvakuum-, Vakuumdruck- oder Druckverfahren.

Holz-Plastik-Verbundstoffe können bspw. dadurch hergestellt werden, dass man Holzpartikel, ein thermoplastisches Polymer und die Zusammensetzungen unter thermischer Energie vermischt, insbesondere extrudiert oder spritzgießt.

Holzwerkstoffe können beispielsweise mit dem Leimuntermischverfahren behandelt werden. Dabei wird die erfindungsgemäße Zusammensetzung ggf. in Form einer Formulierung der Leimflotte beigegeben und dieser biozidausgerüstete Leim wie üblich auf die Späne aufgebracht, insbesondere aufgedüst (z.B. bei Span- oder OSB-Platten) oder über Walzen auf die Furniere aufgebracht (z.B. bei Sperrholz). Beim Oberflächenverfahren wird die erfindungsgemäße Zusammensetzung ggf. in Form einer Formulierung auf den Holzwerkstoff aufgesprüht oder mit einer Walze aufgetragen.

Die Anwendungskonzentrationen der erfindungsgemäßen Wirkstoffe richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im Allgemeinen liegen die Anwendungskonzentrationen im Bereich von 0,001 bis 5 Gewichts%, vorzugsweise von 0,005 bis 1,0 Gewichts% des Wirkstoffes zuzüglich Wirkverstärker und ggfs. weiterer Zusätze, bezogen auf das zu schützende Material.

Im industriellen Holzschutz wird beispielsweise 10 bis 500 g Wirkstoff pro $m^3$ Holz, vorzugsweise 50 bis 300 $g/m^3$ zuzüglich Wirkverstärker und ggfs. weiterer Zusätze eingesetzt.

## Beispiele

**Beispiel 1:** Kombinationen von Tebuconazol und 6,6'-Di-tert-butyl-2,2'-methylendi-p-kresol (Vulkanox® BKF) gegen den Holzdestruenten Coriolus versicolor

Aus einer Kolonie des Holzdestruenten Coriolus versicolor wurden Mycelstücke ausgestochen und auf einem Malzextrakt-Pepton-haltigen Nähragar bei 26°C inkubiert. Hierbei wurde das Hyphenwachstum mit und ohne Wirkstoff- bzw. 6,6'-Di-tert-butyl-2,2'-methylendi-p-kresol verglichen. Als Minimale Hemmkonzentration (MHK) wurde die Konzentration angegeben, welche das radiale Hyphenwachstum völlig unterdrückt (Inkubationszeit: ca. 1 Woche, abhängig von dem Pilzwachstum der Vergleichsprobe ohne Wirkstoff).

Nach der von Kull et al. (F.C. Kull, P.C. Eismann, H.D. Sylvestrowicz, R.L. Mayer, Applied Microbiology 1961, 9, 538-541) beschriebenen Methode wurde der Synergismus ermittelt. Dabei gelten folgende Beziehungen:

$$\frac{Q_A}{Q_a} + \frac{Q_B}{Q_b} = SI$$

SI = 1 bedeutet Additivität

SI > 1 bedeutet Antagonismus

SI < 1 bedeutet Synergismus

$Q_a$ = Konzentration von Substanz A, welche die MHK darstellt

$Q_b$ = Konzentration von Substanz B, welche die MHK darstellt

$Q_A$ = Konzentration von Substanz A in der Konzentration von A/B, die das Mikrobenwachstum unterbindet

$Q_B$ = Konzentration von Substanz B in der Konzentration von A/B, die das Mikrobenwachstum unterbindet

Ergebnisse:

| | MHK-Wert gegen Coriolus versicolor (ppm) | Synergistischer Wert SI |
|---|---|---|
| Tebuconazol | 1,0 | - |
| Tebuconazol / Phenol I[2] (1 : 4) | 2,0 | 0,45 |
| Tebuconazol / Phenol I[2] (1 : 9) | 3,0 | 0,39 |
| Phenol I[2]) | > 30[1]) | - |
| [1]) Bis 30 ppm konnte keine eigene Wirkung festgestellt werden.<br>[2]) Phenol I: 6,6'-Di-tert-butyl-2,2'-methylendi-p-kresol (Vulkanox® BKF, 98%) | | |

Tebuconazol und 6,6'-Di-tert-butyl-2,2'-methylendi-p-kresol zeigen im Fall des Holzdestruenten Coriolus versicolor in verschiedenen Mischungsverhältnissen einen ausgeprägten Synergismus.

**Beispiel 2:** Kombinationen von Tebuconazol und styrolisiertem Phenol (Vulkanox® SP) gegen den Holzdestruenten Coriolus versicolor

| | MHK-Wert gegen Coriolus versicolor (ppm) | Synergistischer Wert SI |
|---|---|---|
| Tebuconazol | 1,0 | - |
| Tebuconazol / Phenol II[2]) (1 : 1) | 0,5 | 0,26 |
| Tebuconazol / Phenol II[2]) (1 : 4) | 2,0 | 0,45 |
| Tebuconazol / Phenol II[2]) (1 : 9) | 2,0 | 0,26 |
| Phenol II[2]) | > 30[1]) | - |
| [1]) Bis 30 ppm konnte keine eigene Wirkung festgestellt werden.<br>[2]) Phenol II: styrolisiertes Phenol (Vulkanox® SP): ca 12 % einfach, ca. 45% zweifach und ca. 43% dreifach styrolisiert | | |

Tebuconazol und styrolisiertes Phenol zeigen im Fall des Holzdestruenten Coriolus versicolor einen ausgeprägten Synergismus.

**Beispiel 3:** Kombinationen von Tebuconazol und styrolisiertem Phenol (Vulkanox® SP) gegen den Holzdestruenten Lentinus tigrinus

| | MHK-Wert gegen Lentinus tigrinus (ppm) | Synergistischer Wert SI |
|---|---|---|
| Tebuconazol | 0,3 | - |
| Tebuconazol / Phenol II[2]) (1 : 1) | 0,5 | 0,84 |

(fortgesetzt)

| | MHK-Wert gegen Lentinus tigrinus (ppm) | Synergistischer Wert SI |
|---|---|---|
| Phenol II[2)] | > 30[1)] | - |
| [1)] Bis 30 ppm konnte keine eigene Wirkung festgestellt werden.<br>[2)] II: styrolisiertes Phenol (Vulkanox® SP): ca 12 % einfach, ca. 45% zweifach und ca. 43% dreifach styrolisiert | | |

Tebuconazol und styrolisiertes Phenol zeigen im Fall den Holzdestruenten Lentinus tigrinus einen ausgeprägten Synergismus.

**Patentansprüche**

1. Zusammensetzung, enthaltend

   a) wenigstens ein Azol und
   b) wenigstens ein Phenol der Formel (I) oder deren Salze

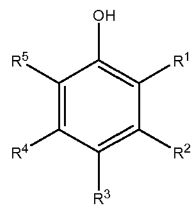

(I)

   worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenigstens einer der Reste $R^1$-$R^5$ ungleich Wasserstoff ist und mit der Maßgabe, dass wenn die Reste $R^1$-$R^5$ ausschließlich für ggf. substituiertes $C_1$-$C_{20}$-Alkyl und ggf. für Wasserstoff stehen

   - wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
   - die Verbindung der Formel (I) wenigstens eine Methylgruppe trägt.

2. Zusammensetzung gemäß Anspruch 1, **dadurch gekennzeichnet, dass** sie wenigstens ein Triazol als Komponente a) enthält, insbesondere ein Triazol ausgewählt aus der Gruppe bestehend aus Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte.

3. Zusammensetzung gemäß Anspruch 1, enthaltend

   a1) wenigstens ein Azol ausgewählt aus der Gruppe bestehend aus Azaconazol, Bitertanol, Bromuconazol, Cyproconazol, Diclobutrazol, Difenoconazol, Diniconazole, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte und
   a2) wenigstens ein Azol ausgewählt aus der Gruppe Triadimenol und Triadimefon.

4. Zusammensetzung gemäß Anspruch 1 enthaltend wenigstens ein Azol ausgewählt aus der Gruppe Tebuconazol, Propiconazol und Cyproconazol und ggf. ein weiteres Azol ausgewählt aus der Gruppe Triadimenol und Triadimefon.

**5.** Zusammensetzung gemäß Anspruch 1, worin wenigstens einer der Reste $R^1$-$R^5$ der Formel (I) für -$CHR^6$-Phenyl steht, worin
$R^6$ für Wasserstoff oder Methyl steht und
Phenyl unsubstituiert oder durch Hydroxy und wenigstens einen $C_1$-$C_4$-Alkylrest substituiert ist.

**6.** Zusammensetzung gemäß Anspruch 1, die als Komponente b) wenigstens ein styrolisiertes Phenol oder 6,6'-Di-tert-butyl-2,2'-methylendi-p-kresol enthält.

**7.** Verwendung von Zusammensetzungen gemäß wenigstens einem der Ansprüche 1 bis 6 zum Schutz von technischen Materialien vor Befall und/oder Zerstörung durch Mikroorganismen.

**8.** Verwendung gemäß Anspruch 7, **dadurch gekennzeichnet, dass** das technische Material Holz, Holzwerkstoff oder Holz-Plastik-Verbundstoff ist.

**9.** Verwendung gemäß Anspruch 7 zum Schutz von Holz, Holzwerkstoff oder Holz-Plastik-Verbundstoff durch holzzerstörende Basidiomyceten, insbesondere Holobasidiomyceten.

**10.** Technische Materialien, insbesondere Holz, Holzwerkstoff oder Holz-Plastik-Verbundstoff enthaltend

a) wenigstens ein Azol und
b) wenigstens ein Phenol der Formel (I) oder deren Salze

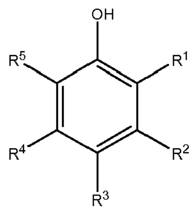

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt.

**11.** Verfahren zum Schutz von technischen Materialien vor Befall und/oder Zerstörung durch Mikroorganismen, **dadurch gekennzeichnet, dass** man wenigstens eine Zusammensetzung, enthaltend

a) wenigstens ein Azol und
b) wenigstens ein Phenol der Formel (I) oder deren Salze

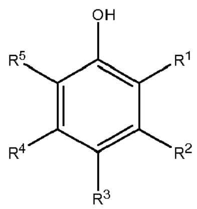

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die

Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt auf den Mikroorganismus oder dessen Lebensraum einwirken lässt.

Europäisches Patentamt
European Patent Office
Office européen des brevets

# EUROPÄISCHER RECHERCHENBERICHT

Nummer der Anmeldung
EP 09 17 0217

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A,D | WO 00/78140 A1 (UNIV MISSISSIPPI [US]; SCHULTZ TOR P [US]; NICHOLAS DARREL D [US]) 28. Dezember 2000 (2000-12-28)<br>* Seite 5, Zeile 5 - Zeile 23 *<br>* Seite 6, Zeile 3 - Zeile 9 *<br>* Seite 10 - Seite 16; Beispiele 1-2 *<br>----- | 1-2,4-5, 7-11 | INV.<br>A01N31/08<br>A01N31/16<br>A01N43/653<br>B27K3/38<br>B27K3/50<br>A01P3/00 |
| A | URYUPINA T L ET AL: "Increasing the potential disease resistance of apples during storage"<br>VESTNIK SEL'SKOHOZÂJSTVENNOJ NAUKI KAZAHSTANA, MINISTERSTVO SEL'SKOGO HOZÂJSTVA KAZAHSKOJ SSR, ALMA-ATA, KZ, Nr. 11, 1. Januar 1996 (1996-01-01), Seiten 43-52, XP009127653<br>ISSN: 0042-4684<br>* Seite 52; Tabelle 6 *<br>-& DATABASE CA [Online]<br>CHEMICAL ABSTRACTS SERVICE, COLUMBUS, OHIO, US;<br>1997,<br>URYUPINA, T. L. ET AL: "Increasing the potential disease resistance of apples during storage"<br>XP002562608<br>gefunden im STN<br>Database accession no. 1997:328218<br>* Zusammenfassung *<br>-----<br>-/-- | 1-2 | RECHERCHIERTE SACHGEBIETE (IPC)<br>A01N<br>B27K |

Der vorliegende Recherchenbericht wurde für alle Patentansprüche erstellt

1

| Recherchenort | Abschlußdatum der Recherche | Prüfer |
|---|---|---|
| München | 12. Januar 2010 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 09 17 0217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | TOR P SCHULTZ ET AL: "Review of Laboratory and Outdoor Exposure Efficacy Results of Organic Biocide: Antioxidant Combinations, An Initial Economic Analysis and Discussion of a Proposed Mechanism" WOOD AND FIBER SCIENCE, THE SOCIETY, LAWRENCE, KS, US, Bd. 37, 1. Januar 2005 (2005-01-01), Seiten 175-184, XP009127565 ISSN: 0735-6161 * Seite 177, Absatz 3 - Absatz 5 * * Seite 179, Absatz 3 * ----- | 1-2,7-11 | |
| A | SCHULTZ T P ET AL: "Naturally durable heartwood: evidence for a proposed dual defensive function of the extractives" PHYTOCHEMISTRY, PERGAMON PRESS, GB, Bd. 54, Nr. 1, 1. Mai 2000 (2000-05-01), Seiten 47-52, XP004291447 ISSN: 0031-9422 * Seite 48, Spalte 2, Absatz 2 - Absatz 4 * * Seite 49; Tabelle 2 * * Seite 50 - Seite 51; Abbildung 1 * ----- -/-- | 1-2,7-11 | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| München | 12. Januar 2010 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 09 17 0217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | SCHULTZ T P ET AL: "Development of environmentally-benign wood preservatives based on the combination of organic biocides with antioxidants and metal chelators" PHYTOCHEMISTRY, PERGAMON PRESS, GB, Bd. 61, Nr. 5, 1. November 2002 (2002-11-01), Seiten 555-560, XP026583678 ISSN: 0031-9422 [gefunden am 2002-11-01] * Seite 556, Spalte 1, Absatz 3 * * Seite 556, Spalte 2, Absatz 3 * * Seite 556; Tabelle 1 * ----- | 1-2,7-11 | |
| A | WO 2005/058238 A2 (MICROBAN PRODUCTS [US]; PAYNE STEPHEN A [US]) 30. Juni 2005 (2005-06-30) * Seite 2, Absatz 9 * * Seite 6, Absatz 31 * * Seite 7, Absatz 34 * ----- | 1-4,6-11 | |

RECHERCHIERTE SACHGEBIETE (IPC)

Der vorliegende Recherchenbericht wurde für alle Patentansprüche erstellt

1

| Recherchenort | Abschlußdatum der Recherche | Prüfer |
|---|---|---|
| München | 12. Januar 2010 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 09 17 0217

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2010

| Im Recherchenbericht angeführtes Patentdokument | Datum der Veröffentlichung | Mitglied(er) der Patentfamilie | Datum der Veröffentlichung |
|---|---|---|---|
| WO 0078140 A1 | 28-12-2000 | AU 5880500 A | 09-01-2001 |
| | | US 6231651 B1 | 15-05-2001 |
| WO 2005058238 A2 | 30-06-2005 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0071314 A
- WO 03065807 A
- US 6231651 B1
- US 6231651 B


### In der Beschreibung aufgeführte Nicht-Patentliteratur


- *Phytochemistry,* 2002, vol. 61, 555-560
- **F.C. Kull ; P.C. Eismann ; H.D. Sylvestrowicz ; R.L. Mayer.** *Applied Microbiology,* 1961, vol. 9, 538-541